# EUROPÄISCHE PATENTANMELDUNG

(11) **EP 1 057 685 A2**
(43) Veröffentlichungstag der Anmeldung: **06.12.2000**
(21) Anmeldenummer: 00109864.9
(22) Anmeldetag: 10.05.2000
(51) Int. Cl.: B60K 31/04, F16H 61/02, F16H 61/16

(54) **Verfahren und Vorrichtung zur Einstellung eines Automatikgetriebes in einem Fahrzeug**

(30) Priorität: 31.05.1999 DE 19924864
(71) Anmelder: DaimlerChrysler AG, 70567 Stuttgart (DE)
(72) Erfinder: Linden, Thomas, 70327 Stuttgart (DE)

(57) **Zusammenfassung**

Bei einem Verfahren zur Einstellung eines Automatikgetriebes in einem Fahrzeug mit Geschwindigkeits-Regelsystem werden unter Berücksichtigung von Fahrzeug-Zustandsgrößen und Fahrzeug-Betriebsgrößen Stellsignale zur Einlegung einer bestimmten Getriebe-Gangstufe zur Einhaltung einer vorgegebenen Zielgeschwindigkeit erzeugt.

Um manuelle Schalteingriffe des Fahrers in den automatisierten Schaltablauf eines Automatikgetriebes zu integrieren, wird nach der Vorgabe einer Zielgeschwindigkeit die aktuelle Getriebe-Gangstufe mit einem vom Fahrer manuell vorgegebenen Zielgang verglichen, wobei für den Fall, daß der vorgegebene Zielgang vom Istgang abweicht, eine obere Gangbegrenzung mit einer dem manuell vorgegebenen Zielgang entsprechenden Höchst-Gangstufe vorgegeben wird.

## Beschreibung

Die Erfindung betrifft ein Verfahren und eine Vorrichtung zur Einstellung eines Automatikgetriebes in einem Fahrzeug mit Geschwindigkeits-Regelsystem nach dem Oberbegriff des Anspruches 1 bzw. 10.

Es sind Geschwindigkeits-Regelsysteme bekannt, mit denen eine vom Fahrer vorgegebene oder über ein automatisches Ermittlungssystem errechnete Zielgeschwindigkeit in einem Kraftfahrzeug selbsttätig eingehalten werden kann. Diese Geschwindigkeits-Regelsysteme umfassen sowohl Tempomat-Funktionen, bei denen das Fahrzeug eine vom Fahrer gewählte Mindestgeschwindigkeit einhalten soll, als auch Begrenzer-Funktionen, bei denen das Fahrzeug eine vom Fahrer vorgegebene oder eine beispielsweise in Absrands-Regelungssystemen automatisch ermittelte Höchstgeschwindigkeit nicht überschreiten darf. Bei den Begrenzer-Funktionen werden in dem Geschwindigkeits-Regelsystem ausgehend von der Höchstgeschwindigkeit und den aktuellen Fahrzeugzustandsgrößen, insbesondere der aktuellen Fahrzeuggeschwindigkeit, Stellsignale erzeugt, mittels denen der Motor, das Getriebe oder die Radbremsen zur Einhaltung der Höchstgeschwindigkeit eingestellt werden.

Aus der Druckschrift DE 44 07 082 A1 ist es bekannt, zur Steuerung von Automatikgetrieben in Kraftfahrzeugen ein Getriebe-Stellsignal zu erzeugen, um das Fahrzeug aus der momentanen Geschwindigkeit auf eine gewünschte Höchstgeschwindigkeit abzubremsen, die beispielsweise dem Abstand zu einem vorausfahrenden Fahrzeug entsprechend ermittelt wird. Hierzu wird ein Gangwechsel in einen kleineren Gang erzwungen, wodurch ein höheres Übersetzungsverhältnis mit einem größeren Verzögerungsmaß erreicht wird. Der Fahrer hat bei diesem System die Möglichkeit, über die Betätigung des Beschleunigungspedals die automatische Abstands- bzw. Geschwindigkeitsregelung außer Kraft zu setzen und den Abstand zum vorausfahrenden Fahrzeug nach eigenem Wunsch einzustellen.

Aus der Druckschrift DE 195 09 492 C2 ist ein Geschwindigkeits-Regelsystem mit Begrenzerfunktion bekannt, bei dem der Fahrer eine maximal zulässige Höchstgeschwindigkeit vorgeben kann. Das Regelsystem begrenzt die Fahrzeuggeschwindigkeit selbsttätig auf die Höchstgeschwindigkeit, wenn die Betätigung des Gaspedals durch den Fahrer eine höhere Fahrzeuggeschwindigkeit als die eingestellte Höchstgeschwindigkeit ergeben würde. In diesem Fall wird unabhängig von der tatsächlichen Gaspedalstellung ein der vorgegebenen Höchstgeschwindigkeit entsprechendes Stellsignal erzeugt, das zur Einstellung des Motors und des Getriebes herangezogen wird.

Bei automatischen Rückschaltungen in derartigen Geschwindigkeits-Regelsystemen werden Schaltlinien, die der Schaltlogik zugrunde liegen, bei Überschreitung der zulässigen Höchstgeschwindigkeit im Schaltprogramm so verändert, daß das Getriebe um eine Schaltstufe zurückschaltet. Dieser Ablauf funktioniert einwandfrei, solange keine manuellen Fahrereingriffe in die Schaltung erfolgen.

Durchbricht der Fahrer durch manuellen Eingriff das reguläre Schaltprogramm und erzwingt eine manuelle Rückschaltung, so können Probleme bei der Zuordnung der zu aktivierenden Schaltlinie auftreten mit der Folge, daß das Regelsystem keine weiteren Rückschaltungen mehr anfordert.

Wird andererseits vom Fahrer manuell eine Hochschaltung angefordert, so wechselt das Geschwindigkeits-Regelsystem sofort auf höhere Schaltlinien um und löst eine kompensierende Rückschaltung aus. Dieser Vorgang kann gegebenenfalls wiederholt auftreten, wodurch jegliche Hochschaltungsabsichten des Fahrers durch das Regelsystem unverzüglich ausgeglichen werden. Die Schaltungsabsicht des Fahrers wird nicht ausgeführt, häufige Schaltungswechsel sind die Folge.

Der Erfindung liegt das Problem zugrunde, manuelle Schalteingriffe des Fahrers in den automatisierten Schaltablauf eines Automatikgetriebes zu integrieren.

Dieses Problem wird erfindungsgemäß mit den Merkmalen des Anspruches 1 bzw. 10 gelöst.

Gemäß dem neuen Verfahren ist vorgesehen, daß im Falle eines manuellen Schaltungseingriffs eine obere Gangbegrenzung mit einer Höchst-Gangstufe vorgegeben wird, welche auf den vom Fahrer gewünschten Zielgang gesetzt wird. Durch die obere Begrenzung auf den Zielgang des Fahrers wird erreicht, daß das Getriebe den Zielgang nicht mehr überschreiten kann, sobald die tatsächliche Getriebe-Gangstufe den Zielgang erreicht hat.

Im Falle einer vom Fahrer ausgelösten Rückschaltung wird die obere Gangbegrenzung auf den kleineren, vom Fahrer gewünschten Gang reduziert. Das für Schaltbewegungen zur Verfügung stehende Gangfenster wird schmaler, wodurch weniger Schaltwechsel entstehen, was ein besseres Einschwingverhalten des Triebstranges zur Folge hat. Häufige Momentenunterbrechungen als Folge von Schaltvorgängen werden reduziert. Die obere Gangbegrenzung wird adaptiv an die vom Fahrer gewünschte Ziel-Fahrstufe angepaßt.

Die in das Schaltprogramm übernommene Ziel-Fahrstufe des Fahrers wird von der Schaltlogik des Regelsystems wie eine vom Regelsystem erzeugte Gangstufe angesehen. Weitere Schaltungsanforderungen vom Fahrer werden zweckmäßig nach einem bereits durchgeführten Schaltwechsel und nach dem Verstreichen einer Drehzahl-Stabilisierungsphase erst mit zeitlicher Verzögerung umgesetzt. Hierdurch werden kurz hintereinander ablaufende Schaltvorgänge vermieden, die insbesondere dadurch entstehen können, daß unmittelbar nach Abschluß eines manuellen Schaltwechsels ein weiterer Gangwechsel vom Regelsystem ausgelöst wird.

Als weitere Bedingung, die bei manuell erzwungener Rückschaltung erfüllt sein muß, damit die Höchst-Gangstufe auf den Zielgang herabgesetzt wird, muß vorteilhaft die aktuelle Getriebedrehzahl unterhalb eines vorgebbaren Grenzwerts liegen, damit Drehzahlüberschreitungen sicher ausgeschlossen werden können.

Im Falle einer vom Fahrer ausgelösten Hochschaltung wird die obere Gangbegrenzung entsprechend dem vom Fahrer gewünschten Zielgang auf einen höheren Gang heraufgesetzt, bis zu dem das Automatikgetriebe entsprechend den äußeren Lastanforderungen an das Fahrzeug schalten darf. Es wird dadurch verhindert, daß unmittelbar nach dem manuellen Heraufschalten vom Regelsystem ein Rückschalten erzwungen wird. Automatische Rückschaltungen sind vorzugsweise nur für den Fall vorgesehen, daß das Fahrzeug sich aus einer Hangstrecke in eine Ebene hineinbewegt, daß die Zielgeschwindigkeit des Fahrzeugs verändert wird oder daß vom Regelsystem selbst zunächst eine Hochschaltung veranlaßt wurde.

Erreicht die aktuelle Getriebe-Gangstufe nicht die vom Regelsystem gesetzte obere Gangbegrenzung, so können zwei Fälle unterschieden werden: zum einen unterscheidet sich der neue, vom Fahrer vorgegebene Zielgang nicht von der aktuellen Getriebe-Gangstufe; in diesem Fall wurde ein begonnener Schaltvorgang vom Fahrer durch manuelle Rückschaltung abgebrochen. Die obere Gangbegrenzung wird vom Regelsystem wieder auf den aktuellen Gang reduziert.

Zum anderen ist der neue Zielgang nicht identisch mit der aktuellen Getriebe-Gangstufe; in diesem Fall ist der Schaltvorgang im Getriebe noch nicht abgeschlossen und es erfolgt eine erneute Überprüfung, ob die aktuelle Getriebe-Gangstufe die obere Gangbegrenzung erreicht.

Weitere Vorteile und zweckmäßige Ausführungsformen sind den weiteren Ansprüchen, der Figurenbeschreibung und den Zeichnungen zu entnehmen. Es zeigen:
- Fig. 1: ein Ablaufdiagramm mit den Verfahrensschritten für die Übernahme einer manuell durchgeführten Rückschaltung in das Schaltprogramm eines Automatikgetriebes zur Einhaltung der vorgegebenen Zielgeschwindigkeit,
- Fig. 2: ein Fig. 1 entsprechendes Ablaufdiagramm, jedoch für die Übernahme einer manuellen Hochschaltung.

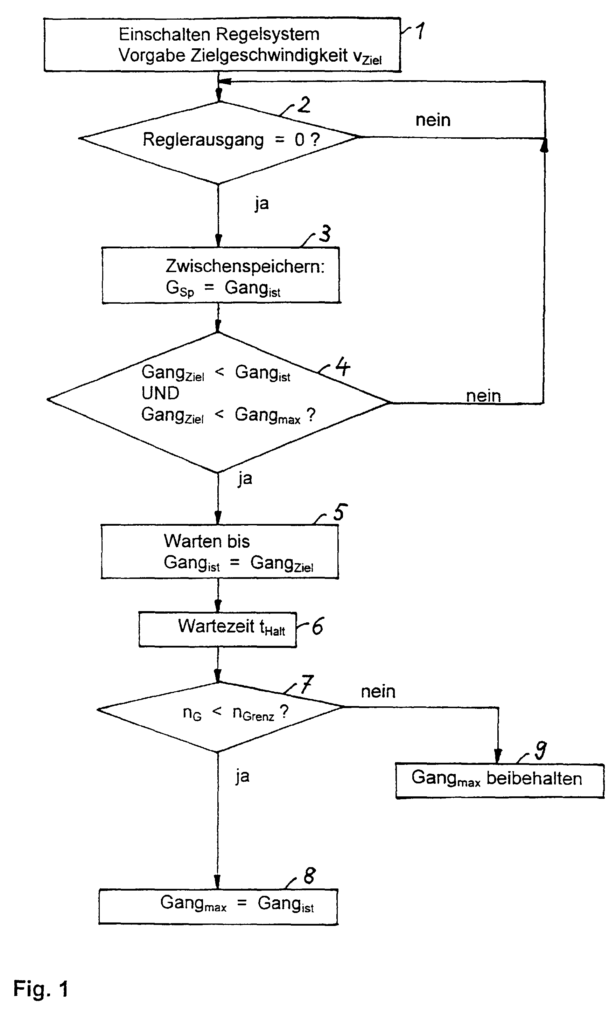

Das in Fig. 1 dargestellte Ablaufschema ist in einem Geschwindigkeits-Regelsystem eines Kraftfahrzeugs zur Einhaltung einer vorgegebenen Geschwindigkeit v_{Ziel} realisiert, die je nach Vorgabe sowohl eine nicht zu überschreitende Obergrenze innerhalb eines Geschwindigkeits-Begrenzersystems als auch eine Tempomatfunktion darstellen kann. Die Zielgeschwindigkeit kann entweder unmittelbar vom Fahrer vorgegeben oder von einem Fahrzeugsystem unter Berücksichtigung äußerer Bedingungen und Einflüsse wie Geschwindigkeitsbeschränkungen, Sichtverhältnisse, Verkehrsdichte etc. automatisch ermittelt werden. Das Regelsystem kann das auf die Straße übertragbare Antriebsmoment sowohl über das Motormoment der Brennkraftmaschine als auch über das Automatikgetriebe zur Einhaltung der Zielgeschwindigkeit beeinflussen. Im folgenden wird eine vorteilhafte Manipulation der Gangstufen im Automatikgetriebe beschrieben.

Gemäß dem Ablaufschema nach Fig. 1 wird in einem Verfahrensschritt 1 zunächst das Regelsystem unter Vorgabe einer Zielgeschwindigkeit v_{Ziel} eingeschaltet. Im folgenden Verfahrensschritt 2 wird überprüft, ob der Reglerausgang des Geschwindigkeits-Regelsystems gleich Null ist, was üblicherweise dann der Fall ist, wenn das Fahrzeug eine Gefällstrecke hinabfährt. Sofern dies zutrifft, wird der Ja-Verzweigung entsprechend zum folgenden Verfahrensschritt 3 fortgefahren, andernfalls erfolgt entsprechend der Nein-Verzweigung eine Rückkehr und erneute, zyklische Überprüfung des Reglerausganges.

Gemäß dem Verfahrensschritt 3 wird die aktuelle Getriebe-Gangstufe Gangᵢₛₜ auf einer variablen G_{Sp} zwischengespeichert, welche als Laufvariable zur Bestimmung der Anzahl hintereinander durchgeführter, manueller Schaltungsanforderungen verwendet wird.

Im folgenden Verfahrensschritt 4 wird abgefragt, ob eine manuell vom Fahrer vorgegebene Rückschaltanforderung vorliegt. Hierzu wird überprüft, ob der manuell vorgegebene Zielgang Gang_{Ziel} kleiner ist als die aktuelle Getriebe-Gangstufe Gangᵢₛₜ. Zugleich muß gewährleistet sein, daß der Zielgang kleiner ist als eine Höchst-Gangstufe Gangₘₐₓ einer oberen Gangbegrenzung für das Automatikgetriebe. Die Höchst-Gangstufe Gangₘₐₓ wird in einem vorhergehenden Bearbeitungszyklus bestimmt bzw. bei erstmaligem Durchlaufen des Bearbeitungszyklus auf die höchstmögliche Gangstufe im Getriebe gesetzt.

Sofern die beiden vorgenannten Bedingungen erfüllt sind, liegt eine manuelle Rückschaltanforderung des Fahrers vor und es wird der Ja-Verzweigung entsprechend zum folgenden Verfahrensschritt 5 fortgefahren. Sofern zumindest eine der Bedingungen nicht erfüllt ist, wird der Nein-Verzweigung entsprechend zu einem neuen Zyklus zur Überprüfung des Reglerausganges gemäß Verfahrensschritt 2 sowie der nachfolgenden Überprüfung, ob eine Rückschaltung stattgefunden hat, zurückgekehrt.

Wie in Verfahrensschritt 5 dargestellt, wird für den Fall, daß eine manuelle Rückschaltanforderung vorliegt, zunächst solange abgewartet, bis die manuelle Rückschaltanforderung auch im Automatikgetriebe ausgeführt worden ist. Dies ist der Fall, sobald die tatsächliche Getriebe-Gangstufe Gangᵢₛₜ mit dem vom Fahrer vorgegebenen Zielgang Gang_{Ziel} übereinstimmt.

Entsprechend dem folgenden Verfahrensschritt 6 wird nach der Umsetzung der Getriebeanforderung eine Wartezeit t_{Halt}, die entweder vorgegeben wird oder aus Fahrzeugparametern und Zustandsgrößen ermittelbar ist, vor der Durchführung eines weiteren Verfahrensschrittes abgewartet. Über die Vorgabe der Wartezeit t_{Halt} soll sichergestellt werden, daß Einschwingvorgänge im Getriebe nach einem Gangwechsel abgeklungen sind und die Getriebedrehzahl sich stabilisiert hat.

Nach der Drehzahlstabilisierung wird im Verfahreneschritt 7 abgeprüft, ob die Getriebedrehzahl n_{G} kleiner ist als ein applizierbarer Grenzwert n_{Grenz}. Diese Überprüfung soll sicherstellen, das Drehzahlüberschreitungen bei Rückschaltungen in einen kleineren Gang vermieden werden. Falls die Drehzahlbedingung nicht erfüllt ist, wird der Nein-Verzweigung entsprechend zum Verfahrensschritt 9 fortgefahren, gemäß dem die Höchst-Gangstufe Gangₘₐₓ, welche im Getriebe nicht überschritten werden darf, auf ihrem bisherigen Wert beibehalten wird. Ist dagegen die Drehzahlbedingung erfüllt, wird gemäß der Ja-Verzweigung im Verfahrensschritt 8 die Höchst-Gangstufe Gangₘₐₓ auf den Wert der aktuellen Getriebe-Gangstufe Gangᵢₛₜ gesetzt. Da die Rückschaltanforderung des Fahrers bereits erfolgreich abgeschlossen ist, ist die tatsächliche Getriebe-Gangstufe Gangᵢₛₜ identisch mit dem Zielgang Gang_{Ziel}. Die Begrenzung des zulässigen Gangspektrums nach oben auf die Höchst-Gangstufe Gangₘₐₓ stellt sicher, daß insbesondere auf Gefällstrecken keine höhere Gangstufe im Getriebe eingelegt werden kann, so daß bei Verwendung des Regelsystems als Geschwindigkeitsbegrenzer eine zulässige Höchstgeschwindigkeit eingehalten werden kann und ein Schiebebetrieb des Fahrzeugs vermieden wird.

Die Zwischenvariable G_{Sp} dient dazu, daß für die Bestimmung der oberen Gangbegrenzung mit Höchst-Gangstufe Gangₘₐₓ nur eine begrenzte Anzahl hintereinander durchgeführter, manueller Schaltungen berücksichtigt wird, um zu verhindern, daß bei einer hohen Anzahl manueller Rückschaltungsanforderungen auch die Höchst-Gangstufe um eine entsprechende Anzahl reduziert wird. Zweckmäßigerweise darf die Höchst-Gangstufe nur um maximal drei Sturen zurückgenommen werden.

Das in Fig. 1 gezeigte Rückschaltschema wird zyklisch durchlaufen. Bei jedem Durchlauf des Schemas werden die aufgezeigten Bedingungen bei einer folgenden Rückschaltungsanforderung erneut mit abgeprüft.

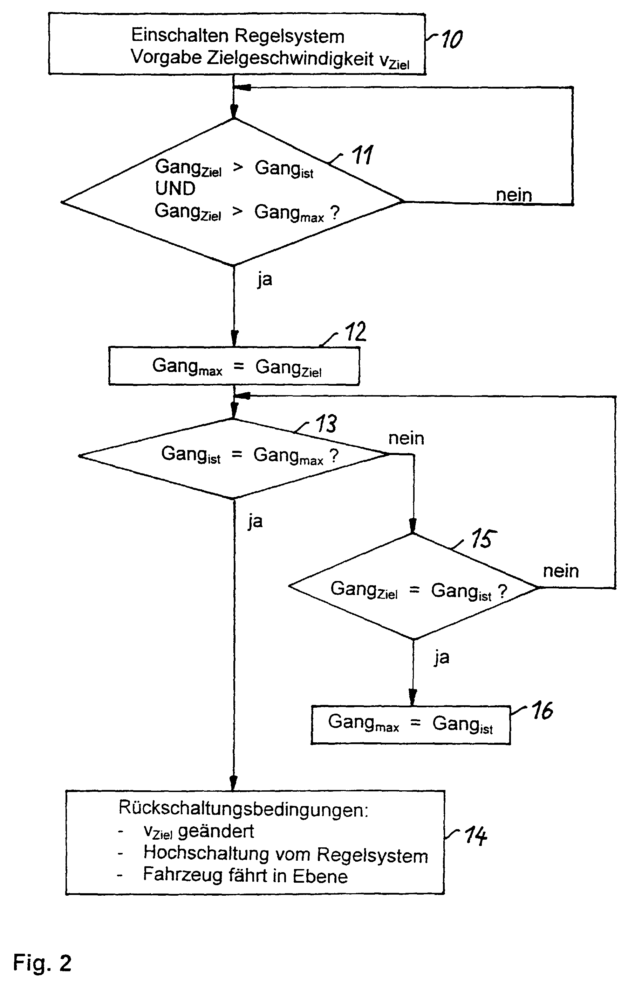

Fig. 2 zeigt den Verfahrensablauf für den Fall manueller Hochschaltanforderungen des Fahrers. Nach dem Einschalten des Geschwindigkeits-Regelsystems und Vorgabe der Zielgeschwindigkeit v_{Ziel} gemäß Verfahrensschritt 10 erfolgt im Verfahrensschritt 11 eine Überprüfung, ob eine Hochschaltanforderung des Fahrers vorliegt und ob diese zulässig ist. Hierzu muß der Zielgang Gang_{Ziel} der Fahreranforderung größer sein als die momentane Getriebe-Gangstufe Gangᵢₛₜ, außerdem muß der Zielgang Gang_{Ziel} auch die bisherige Gangobergrenze Gangₘₐₓ überschreiten. Sofern eine oder beide dieser Bedingungen nicht erfüllt sind, wird der Nein-Verzweigung entsprechend in einem neuen Zyklus abgefragt, ob die Bedingungen erfüllt sind. Sind beide Bedingungen gegeben, wird der Ja-Verzweigung entsprechend zum Verfahrensschritt 12 fortgefahren, in welchem die Höchst-Gangstufe Gangₘₐₓ auf den vom Fahrer vorgegebenen Zielgang Gang_{Ziel} hochgesetzt wird. Die obere Gangbegrenzung mit Höchst-Gangstufe Gangₘₐₓ kann im Getriebe nicht überschritten werden, wobei die Heraufsetzung der oberen Gangbegrenzung auf den Wert der Zielgangstufe Gang_{Ziel} adaptiv der Fahreranforderung nachgeführt wird.

Im folgenden Verfahrensschritt 13 wird die Umsetzung der manuellen Fahreranforderung in eine entsprechende Getriebe-Gangstufe überprüft. Die momentane Getriebe-Gangstufe Gangᵢₛₜ wird mit der Höchst-Gangstufe Gangₘₐₓ, welche im vorhergehenden Verfahrensschritt auf die Ziel-Gangstufe Gang_{Ziel} gesetzt wurde, verglichen. Sofern die Getriebe-Gangstufe Gangᵢₛₜ bereits die Höchst-Gangstufe erreicht hat, wird der Ja-Verzweigung entsprechend zum Verfahrensschritt 14 fortgefahren, in dem Bedingungen formuliert sind, die für eine auf die Hochschaltung folgende Rückschaltung erfüllt sein müssen. Als Rückschaltbedingungen kommen in Frage, ob die Zielgeschwindigkeit v_{Ziel} geändert wurde, ob vom Regelsystem eine weiter Hochschaltung veranlaßt wurde oder ob das Fahrzeug in einer Ebene fährt. Sofern zumindest eine dieser Bedingungen erfüllt ist, können vom Regelsystem selbsttätig Rückschaltungen durchgeführt werden.

Falls gemäß der Abfrage in Verfahrensschritt 13 die aktuelle Getriebe-Gangstufe Gangᵢₛₜ nicht mit der Höchst-Gangstufe Gangₘₐₓ übereinstimmt, liegt ein Abbruch der Hochschaltanforderung des Fahrers vor, es wird zum Verfahreneschritt 15 fortgefahren. Gemäß Verfahrensschritt 15 erfolgt eine weitere Abfrage, ob der momentane Zielgang Gang_{Ziel} identisch ist mit der aktuellen Getriebe-Gangstufe Gangᵢₛₜ. Diese Abfrage trägt einer vom Fahrer zunächst initiierten und unmittelbar darauffolgend abgebrochenen Hochschaltung Rechnung, bei der kurzzeitig eine höhere Gangstufe vom Fahrer vorgegeben wird, die jedoch sofort wieder zurückgenommen wird. In diesem Fall nimmt der vorgegebene Zielgang Gang_{Ziel} den gleichen Wert ein wie die unveränderte Getriebe-Gangstufe Gangᵢₛₜ, es wird der Ja-Verzweigung entsprechend im Verfahrensschritt 16 die Höchst-Gangstufe Gangₘₐₓ wieder auf die aktuelle Getriebe-Gangstufe Gangᵢₛₜ zurückgesetzt.

Falls die Abfrage im Verfahrensschritt 15 ergibt, daß die Ziel-Gangstufe Gang_{Ziel} nicht identisch ist mit der aktuellen Getriebe-Gangstufe Gangᵢₛₜ, wird der Nein-Verzweigung entsprechend zur Abtrage 13 zurückgekehrt, in der erneut überprüft wird, ob die aktuelle Getriebe-Gangstufe mit der Höchst-Gangstufe übereinstimmt.

Auch das in Fig. 2 dargestellte Schema wird bei eingeschaltetem Regelsystem mit Vorgabe einer Zielgeschwindigkeit v_{Ziel} zyklisch mit Abprüfung aller darin enthaltenen Bedingungen durchlaufen.

## Patentansprüche

1. Verfahren zur Einstellung eines Automatikgetriebes in einem Fahrzeug mit Geschwindigkeits-Regelsystem, wobei unter Berücksichtigung von Fahrzeug-Zustandsgrößen und Fahrzeug-Betriebsgrößen Stellsignale zur Einlegung einer bestimmten Getriebe-Gangstufe zur Einhaltung einer vorgegebenen Zielgeschwindigkeit (v_{Ziel}) erzeugt werden,
**dadurch gekennzeichnet,**
- daß nach der Vorgabe einer Zielgeschwindigkeit (v_{Ziel}) die aktuelle Getriebe-Gangstufe (Gangᵢₛₜ) mit einem vom Fahrer manuell vorgegebenen Zielgang (Gang_{Ziel}) verglichen wird,
- daß für den Fall, daß der manuell vorgegebene Zielgang (Gang_{Ziel}) von der aktuellen Getriebe-Gangstufe (Gangᵢₛₜ) abweicht, eine obere Gangbegrenzung mit einer dem manuell vorgegebenen Zielgang (Gang_{Ziel}) entsprechenden Höchst-Gangstufe (Gangₘₐₓ) vorgegeben wird.

2. Verfahren nach Anspruch 1,
**dadurch gekennzeichnet,**
daß im Falle einer manuell erzwungenen Rückschaltung die Höchst-Gangstufe (Gangₘₐₓ) nur dann auf den Wert des Zielganges (Gang_{Ziel}) gesetzt wird, falls die Getriebedrehzahl (n_{G}) einen applizierbaren Grenzwert (n_{Grenz}) unterschreitet.

3. Verfahren nach Anspruch 2,
**dadurch gekennzeichnet,**
daß der Vergleich der Getriebedrehzahl (n_{G}) mit dem Grenzwert (n_{Grenz}) erst nach Einhaltung einer vorgebbaren Wartezeit (t_{Halt}) durchgeführt wird.

4. Verfahren nach einem der Ansprüche 1 bis 3,
**dadurch gekennzeichnet,**
daß im Falle einer manuell erzwungenen Rückschaltung die Herabsetzung der Höchst-Gangstufe (Gangₘₐₓ) auf den Zielgang (Gang_{Ziel}) nur für den Fall vorgenommen wird, daß der Reglerausgang des Geschwindigkeits-Regelsystems gleich Null ist.

5. Verfahren nach einem der Ansprüche 1 bis 4,
**dadurch gekennzeichnet,**
daß bei der Bestimmung der oberen Gangbegrenzung nur eine begrenzte Anzahl hintereinander durchgeführter, manueller Schaltungsanforderungen berücksichtigt wird.

6. Verfahren nach einem der Ansprüche 1 bis 5,
**dadurch gekennzeichnet,**
daß im Falle einer manuell erzwungenen Hochschaltung eine anschließende Rückschaltung nur für den Fall stattfindet, daß zumindest eine der folgenden Bedingungen erfüllt ist:
- die Zielgeschwindigkeit (v_{Ziel}) wird geändert,
- das Fahrzeug fährt in der Ebene,
- das Regelsystem hat eine Hochschaltung veranlaßt.

7. Verfahren nach Anspruch 6,
**dadurch gekennzeichnet,**
daß eine Rückschaltung nur für den Fall möglich ist, daß die aktuelle Getriebe-Gangstufe (Gangᵢₛₜ) die neu ermittelte Höchst-Gangstufe (Gangₘₐₓ) erreicht.

8. Verfahren nach einem der Ansprüche 1 bis 6,
**dadurch gekennzeichnet,**
daß für den Fall, daß die aktuelle Getriebe-Gangstufe (Gangᵢₛₜ) die neu ermittelte Höchst-Gangstufe (Gangₘₐₓ) nicht erreicht, und für den Fall, daß der momentane Zielgang (Gang_{Ziel}) identisch ist mit der aktuellen Getriebe-Gangstufe (Gangᵢₛₜ), die Höchst-Gangstufe (Gangₘₐₓ) auf die aktuelle Getriebe-Gangstufe (Gangᵢₛₜ) gesetzt wird.

9. Verfahren nach einem der Ansprüche 1 bis 6,
**dadurch gekennzeichnet,**
daß für den Fall, daß die aktuelle Getriebe-Gangstufe (Gangᵢₛₜ) die neu ermittelte Höchst-Gangstufe (Gangₘₐₓ) nicht erreicht, und für den Fall, daß der neue Zielgang (Gang_{Ziel}) nicht identisch ist mit der aktuellen Getriebe-Gangstufe (Gangᵢₛₜ), eine Rückschaltung nur für den Fall möglich ist, daß die aktuelle Getriebe-Gangstufe (Gangᵢₛₜ) die neu ermittelte Höchst-Gangstufe (Gangₘₐₓ) erreicht.

10. Vorrichtung zur Einstellung eines Automatikgetriebes in einem Fahrzeug mit Geschwindigkeits-Regelsystem, insbesondere Vorrichtung zur Durchführung des Verfahrens nach einem der Ansprüche 1 bis 9, wobei in dem Geschwindigkeits-Regelsystem, in welchem die dem vom Fahrer über die Ist-Gaspedalstellung (Gasᵢₛₜ) angeforderten Motormoment entsprechende Geschwindigkeit mit der vorgegebenen Höchstgeschwindigkeit (vₘₐₓ) vergleichbar ist, unter Berücksichtigung von Fahrzeug-Zustandsgrößen und Fahrzeug-Betriebsgrößen Steilsignale zur Einlegung einer bestimmten Gangstufe erzeugbar und dem Automatikgetriebe zuführbar sind,
**dadurch gekennzeichnet,**
- daß ein der aktuellen Getriebe-Gangstufe (Gangᵢₛₜ) entsprechendes Signal mit einem einem vom Fahrer manuell vorgegebenen Zielgang (Gang_{Ziel}) entsprechenden Signal vergleichbar ist,
- daß im Fall einer Abweichung des Zielganges (Gang_{Ziel}) von der aktuellen Getriebe-Gangstufe (Gangᵢₛₜ) ein einer oberen Gangbegrenzung entsprechendes Stellsignal mit einer dem manuell vorgegebenen Zielgang (Gang_{Ziel}) entsprechenden Höchst-Gangstufe (Gangₘₐₓ) vorgebbar ist.
